# EUROPÄISCHE PATENTSCHRIFT

(11) **EP 2 433 413 B1**
(45) Veröffentlichungstag und Bekanntmachung des Hinweises auf die Patenterteilung: **28.09.2016**
(21) Anmeldenummer: 10726010.1
(22) Anmeldetag: 18.05.2010
(51) Int. Cl.: H04L 29/08, G06F 12/14

(54) **PEER-TO-PEER-ÜBERTRAGUNGSSYSTEM FÜR DATENSTRÖME**
PEER-TO-PEER TRANSMISSION SYSTEM FOR DATA STREAMS
SYSTÈME DE TRANSMISSION PAIR À PAIR DE FLUX DE DONNÉES

(30) Priorität: 20.05.2009 DE 102009022207
(43) Veröffentlichungstag der Anmeldung: 28.03.2012
(73) Patentinhaber: Institut für Rundfunktechnik GmbH, 80939 München (DE)
(72) Erfinder: GROH, Jens, 80807 München (DE); HAMMER, Matthias, 80796 München (DE); ERK, Alexander, 85737 Ismaning (DE); MERKEL, Klaus, 80797 München (DE); KILGER, Sebastian, 80805 München (DE); GÜLBAHAR, Mark, 84034 Landshut (DE); SEDLMEYER, Robert, 85737 Ismaning (DE)
(74) Vertreter: Camolese, Marco
(86) Internationale Anmeldenummer: PCT/EP2010/056826
(87) Internationale Veröffentlichungsnummer: WO 2010/133599

(56) Entgegenhaltungen:
- WO-A2-2006/126143
- US-A1- 2002 162 109
- US-A1- 2003 204 602
- US-A1- 2008 256 246

## Beschreibung

Die Erfindung bezieht sich auf ein Peer-to-Peer-Übertragungssystem für Datenströme. Ein derartiges Übertragungssystem ist beispielsweise aus dem Buch "Peer-to-Peer-Systems and Applications" von Ralf Steinmetz und Klaus Wehrle, Springer Publishing, 2005, ISBN 3-540-29192-X bekannt.

Peer-to-Peer-(P2P)-Systeme sind übergeordnete Netzarchitekturen aus gleichberechtigten Rechnern (Peers), die an einer kollektiven Datenübertragung teilnehmen und darin sowohl empfangs- als auch Sendeaufgaben übernehmen können. Das Gesamtverhalten des Systems entsteht aus den lokalen Interaktionen zwischen den Peers. Es gibt keine zentrale Koordination für die Interaktionen der Peers untereinander und keine zentrale Datenbasis. Vielmehr speichert jeder Peer nur einen Teil der im Gesamtsystem vorhandenen Daten und stellt diesen Teil den anderen Peers zur Verfügung. Alle gespeicherten Daten sind daher im gesamten System verfügbar. Kein Peer verwaltet jedoch den Gesamtbestand der Daten.

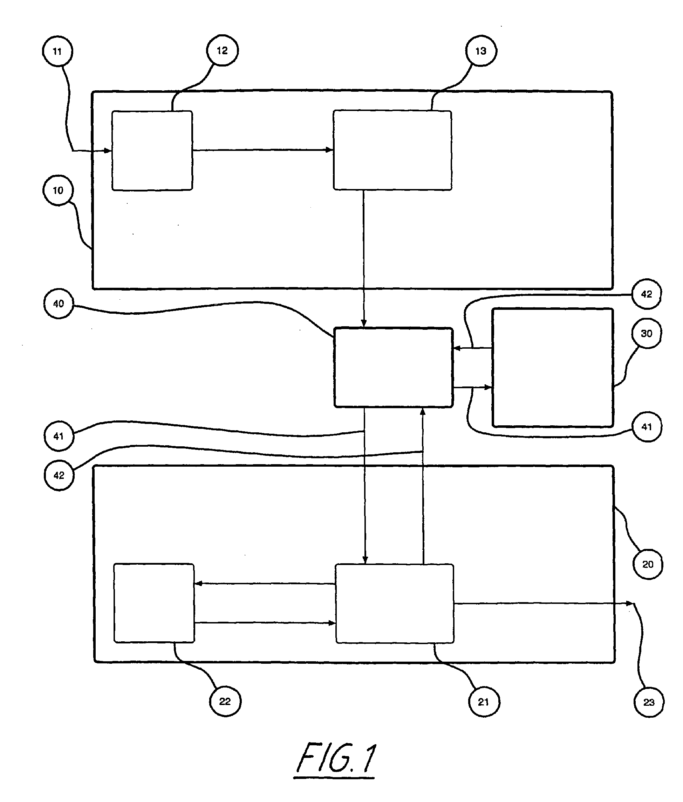

Ein Beispiel für ein bekanntes Peer-to-Peer-(P2P)-System ist in Fig. 1 mit einem Kollektiv von Peers 10, 20, 30 und einem Peer-to-Peer-Übertragungsmechanismus 40 dargestellt. Einem sendenden Peer 10 wird von einem anderen Peer des Kollektivs ein Datenstrom über dessen Dateneingang 11 zugeführt. Ein Daten-Partionierer 12 im sendenden Peer 10 teilt den eingehenden Datenstrom logisch oder zeitlich in verschiedene Teile auf, die in einem volatilen Speicher 13 gepuffert werden, so dass die einzelnen Teile auf voneinander verschiedenen Wegen über den Peer-to-Peer-Übertragungsmechanismus 40 zu den empfangenden Peers 20, 30 über Verbindungen 41 übertragen werden können. Bei dem Peer-to-Peer-Übertragungsmechanismus 40 handelt es sich um einen Übertragungsmechanismus in einem Kollektiv von Peers, bei dem die Daten von mindestens einem Punkt (sendender Peer) zu mindestens einem Punkt (empfangender Peer) auf dezentrale Weise verteilt werden, indem sie zwischen empfangenden Peers weitergesendet werden.

Die vom empfangenden Peer 20 über die Verbindung 41 empfangenen Teile des unterteilten Datenstroms werden dort in einem volatilen Speicher 21 gepuffert und wieder zu einem vollständigen Datenstrom zusammengesetzt, der an einem Datenausgang 23 zur Verfügung steht. Als volatiler Speicher 21 kann beispielsweise ein Halbleiter-Arbeitsspeicher vorgesehen sein. Ferner können aus dem volatilen Speicher 21 heraus die gepufferten Teile des unterteilten Datenstroms an andere empfangende Peers im Kollektiv 30 über die Verbindungen 42 und den Peer-to-Peer-Übertragungsmechanismus 40 weitergesendet werden, wodurch der empfangende Peer 20 zumindest teilweise die Rolle eines sendenden Peers übernimmt. Die von dem volatilen Speicher 21 gepufferten Teile des unterteilten Datenstroms werden ferner in einen persistenten Speicher 22 des empfangenden Peers 20 kopiert, um sie nötigenfalls zu einem späteren Zeitpunkt in den volatilen Speicher 21 zurückkopieren zu können. Als persistenter Speicher 22 kann beispielsweise ein Festplattenspeicher vorgesehen sein. Die zurückkopierten Teile des unterteilten Datenstroms können wiederum aus dem volatilen Speicher 21 heraus an andere empfangende Peers im Kollektiv 30 über die Verbindungen 42 und den Peer-to-Peer-Übertragungsmechanismus 40 weitergesendet werden, wodurch auch in diesem Falle der empfangende Peer 20 zumindest teilweise die Rolle eines sendenden Peers übernimmt.

Die Aufgabe der Erfindung besteht gegenüber dem vorstehend erläuterten Peer-to-Peer-(P2P)-System darin, den Umfang der persistent zu speichernden Daten zu verringern.

Diese Aufgabe wird erfindungsgemäß dadurch gelöst, dass ein Anteil der empfangenen Daten von der persistenten Speicherung ausgeschlossen wird, wobei dieser Ausschluss durch Auswahl von Teilen des unterteilten Datenstroms erfolgt.

Vorzugsweise ist der ausgeschlossene Anteil klein gegenüber dem verbleibenden Rest an Daten.

Der erfindungsgemäße Ausschluss eines Anteils der empfangenen Daten von der persistenten Speicherung wird für zwei Abwandlungen des Systems gemäß Fig. 1 an hand der Figuren 2 und 3 näher erläutert.

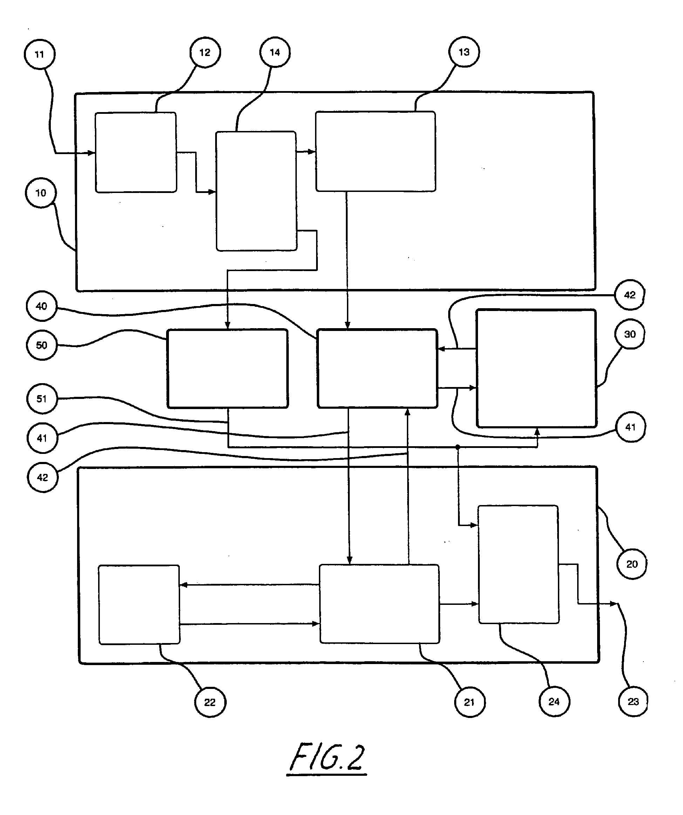

Bei die Abwandlung nach Fig. 2 ist das System nach Fig. 1 um einen zweiten, sekundären Übertragungsmechanismus erweitert. Die vom Daten-Partionierer 12 unterteilten Daten des Eingangsdatenstroms werden einem Daten-Auswähler 14 zugeführt, welcher von den unterteilten Daten (Datenteile) einen Anteil der Datenteile auswählt. Dieser ausgewählte Anteil der unterteilten Daten wird von der Pufferung im volatilen Speicher 13 und der anschließenden Übertragung über den Mechanismus 40 dadurch ausgeschlossen, dass der ausgewählte Anteil von den restlichen Daten der unterteilten Daten abgetrennt und von dem Daten-Auswähler 14 in einen sekundären Übertragungsmechanismus 50 umgeleitet wird. Die restlichen Daten der unterteilten Daten werden wie in Fig. 1 in dem volatilen Speicher 13 gepuffert und von dort dem primären Übertragungsmechanischmus 40 zugeführt. Die Auswahl der auszuschließenden Teile der unterteilten Daten wird von einer Steuerung im sendenden Peer 10 bestimmt, die in dem Daten-Auswähler 14 integriert ist.

Alle Peers 20, 30 weisen einen Daten-Kombinierer 24 auf, welcher mit dem sekundären Übertragungsmechanismus 50 über eine Verbindungen 51 verbunden sind. Über die Verbindung 51 erhalten die Peers 20, 30, sofern nötig, den abgetrennten, umgeleiteten Anteil der unterteilten Daten direkt von dem sendenden Peer 10. Der Daten-Kombinierer 24 kombiniert den abgetrennten, umgeleiteten Anteil der unterteilten Daten mit den restlichen Daten der unterteilten Daten, die im primären Übertragungsmechanismus 40 übertragen und in dem volatilen Speicher 21 gepuffert wurden. Am Ausgang des Daten-Kombinierers 24 (der den Datenausgang 23 des Peers 20 darstellt) steht dann der vollständige Datenstrom der vom Daten-Partionierer 12 im Peer 10 unterteilten Daten zur Verfügung.

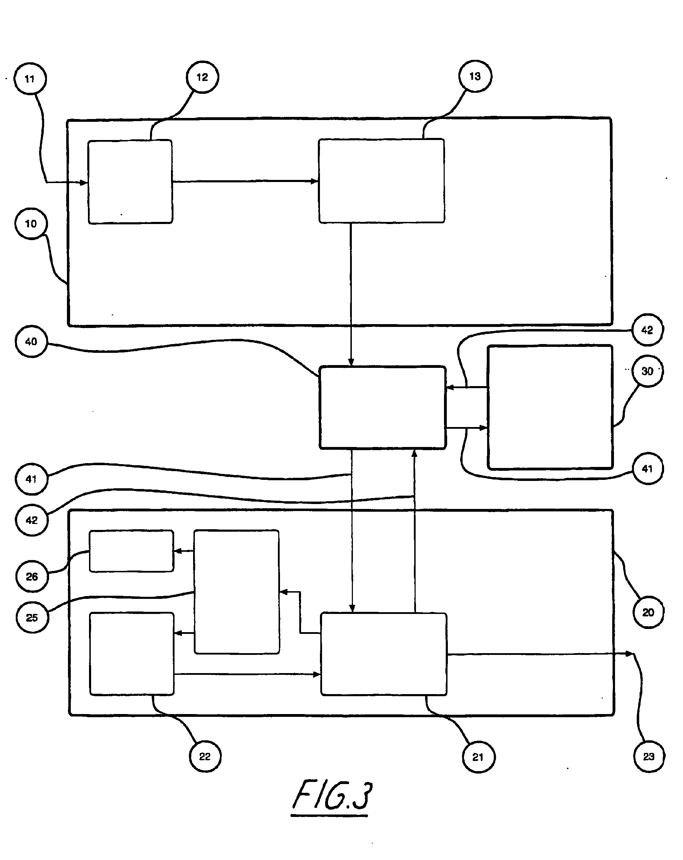

Bei die Abwandlung nach Fig. 3 ist das System nach Fig. 1 ist im empfangenden Peer 20 ein Daten-Auswähler 25 vorgesehen, welcher von dem im volatilen Speicher 21 gepufferten, unterteilten Daten (Datenteile) einen Anteil der auswählt. Dieser ausgewählte Anteil der unterteilten Daten wird in dem Daten-Auswähler25 abgetrennt und einer Löschungseinheit 26 zugeführt, welche den ausgewählten Anteil löscht. Der verbleibende Rest der gepufferten, unterteilten Daten (Datenteile) wird von dem Daten-Auswähler 25 dem persistenten Speicher 22 zugeführt und dort kopiert. Der kopierte verbleibende Rest wird gegebenenfalls zu einem späteren Zeitpunkt von dem persistenten Speicher 22 in den volatilen Speicher 21 zurückkopiert.

Die Auswahl des auszuschließenden Anteils der unterteilten Daten wird von einer Steuerung im sendenden oder im empfangenden Peer bestimmt. Die Auswahl wird so getroffen, dass nicht bei jedem empfangenden Peer 20 die gleichen Datenteile von der Löschung betroffen sind. Diese ungleiche Auswahl kann durch einen Zähler oder durch einen Zufallsgenerator erfolgen. Benötigt der empfangende Peer 20 den abgetrennten und gelöschten Anteil der unterteilten Daten zu einem späteren Zeitpunkt, um zumindest teilweise die Rolle eines sendenden Peers zu übernehmen, so wird dieser gelöschte Anteil erneut durch den Peer-to-Peer-Übertragungsmechanismus 40 übertragen.

## Patentansprüche

1. Peer-to-Peer-Übertragungssystem für Datenströme, bestehend aus einem Kollektiv von gleichberechtigten Rechnern (10, 20, 30) und einem Peer-to-Peer-Übertragungsmechanismus (40), wobei einem sendenden Peer (10) von einem anderen Peer des Kollektivs ein Datenstrom zugeführt wird, mit einem Daten-Partionierer (12) in jedem sendenden Peer (10), welcher den eingehenden Datenstrom logisch oder zeitlich in verschiedene Teile aufteilt, die in einem volatilen Speicher (13) gepuffert und auf voneinander verschiedenen Wegen über den Peer-to-Peer-Übertragungsmechanismus (40) zu den empfangenden Peers (20, 30) übertragen werden, wobei in einem empfangenden Peer (20) die empfangenen Teile des unterteilten Datenstroms in einem volatilen Speicher (21) gepuffert und wieder zu einem vollständigen Datenstrom zusammengesetzt werden, wobei in dem empfangenden Peer (20) ein Anteil der von dem volatilen Speicher (21) gepufferten Teile des unterteilten Datenstroms in einen persistenten Speicher (22) kopiert wird, und wobei die in den persistenten Speicher (22) kopierten Teile des unterteilten Datenstroms gegebenenfalls zu einem späteren Zeitpunkt in den volatilen Speicher (21) zurückkopiert werden, **dadurch gekennzeichnet, dass** der andere Anteil der von dem volatilen Speicher (21) gepufferten Teile des unterteilten Datenstrom von der persistenten Speicherung ausgeschlossen wird, wobei dieser Ausschluss durch Auswahl von Teilen des unterteilten Datenstroms erfolgt, dass die Auswahl des auszuschließenden Anteils der unterteilten Daten von einer Steuerung im sendenden Peer (10) oder in empfangenden Peer (20) dahingehend bestimmt wird, dass nicht bei jedem empfangenden Peer (20) die gleichen Datenteile von der Löschung betroffen sind, und dass für den Fall, dass der empfangende Peer (20) den abgetrennten und gelöschten Anteil der unterteilten Daten zu einem späteren Zeitpunkt benötigt, um zumindest teilweise die Rolle eines sendenden Peers zu übernehmen, dieser gelöschte Anteil erneut durch den Peer-to-Peer-Übertragungsmechanismus (40) übertragen wird.

2. Peer-to-Peer-Übertragungssystem nach Patentanspruch 1, **dadurch gekennzeichnet, dass** der ausgeschlossene Anteil klein gegenüber dem verbleibenden Rest an Daten ist.

3. Peer-to-Peer-Übertragungssystem nach Anspruch 1 oder 2, **dadurch gekennzeichnet, dass** in dem sendenden Peer (10) ein Daten-Auswähler (14) vorgesehen ist, welcher von den unterteilten Daten einen Anteil auswählt, wobei dieser ausgewählte Anteil der unterteilten Daten von der Pufferung im volatilen Speicher (13) und der anschließenden Übertragung über den Mechanismus (40) dadurch ausgeschlossen wird, dass der ausgewählte Anteil von den restlichen Daten der unterteilten Daten abgetrennt und von dem Daten-Auswähler (14) in einen sekundären Übertragungsmechanismus (50) umgeleitet wird.

4. Peer-to-Peer-Übertragungssystem nach Anspruch 3, **dadurch gekennzeichnet, dass** die Steuerung, die die Auswahl des auszuschließenden Anteils der unterteilten Daten bestimmt, in dem Daten-Auswähler (14) integriert ist.

5. Peer-to-Peer-Übertragungssystem nach Anspruch 1 oder 2, **dadurch gekennzeichnet, dass** im empfangenden Peer (20) ein Daten-Auswähler (25) vorgesehen ist, welcher von den im volatilen Speicher (21) gepufferten, unterteilten Daten einen Anteil auswählt, welcher abgetrennt und gelöscht wird.

6. Peer-to-Peer-Übertragungssystem nach Anspruch 5, **dadurch gekennzeichnet, dass** die Auswahl des auszuschließenden Anteils der unterteilten Daten durch einen Zähler oder durch einen Zufallsgenerator erfolgt.

## Claims

1. A peer-to-peer transmission system for data streams, comprising a collective of computers (10, 20, 30) having equal rights and a peer-to-peer transmission mechanism (40), wherein a data stream is fed into a transmitting peer (10) from another peer of the collective, having a data partitioner (12) in each transmitting peer (10), which logically or with regard to time divides the incoming data stream into different parts, which are buffered in a volatile memory (13) and transmitted to the receiving peers (20, 30) on different paths by means of the peer-to-peer transmission mechanism (40), wherein, in a receiving peer (20), the received parts of the subdivided data stream are buffered in a volatile memory (21) and reassembled into a complete data stream, and wherein, in the receiving peer (20), a fraction of the parts of the subdivided data stream, buffered by the volatile memory (21), is copied into a persistent memory (22), and wherein the fraction of the parts of the subdivided data stream, copied into the persistent memory (22), are copied back into the volatile memory at a later point in time if necessary, **characterized in that** other fraction of the parts of the subdivided data stream, buffered by the volatile memory (21), is excluded from persistent storing, wherein this exclusion is performed by selecting parts of the subdivided data stream, that the selection of the to-be-excluded fraction of the subdivided data is determined by a controller in the transmitting peer (10) or in the receiving peer (20) to the extent that, not for each individual receiving peer (20), the same data parts are affected by a deletion, and that, in the case that the receiving peer (20) requires a separated and a deleted fraction of the subdivided data at a later point in time in order to assume the role of a transmitting peer at least partially, said deleted fraction is again transmitted by means of the peer-to-peer transmission mechanism (40).

2. The peer-to-peer transmission system according to claim 1, **characterized in that** the excluded fraction is small with regard to the remaining rest of data.

3. The peer-to-peer transmission system according to claim 1 or 2, **characterized in that**, in the transmitting peer (10), a data selector (14) is provided, which selects a fraction from the subdivided data, wherein this selected fraction of the subdivided data is excluded from buffering in the volatile memory (13) and from the subsequent transmission by means of the mechanism (40) **in that** the selected fraction of the remaining data of the subdivided data is separated and rerouted into a secondary transmission mechanism (50) by the data selector.

4. The peer-to-peer transmission system according to claim 3, **characterized in that** the controller that determines the selection of the to-be-excluded fraction of the subdivided data, is integrated in the data selector (14).

5. The peer-to-peer transmission system according to claim 1 or 2, **characterized in that**, in the receiving peer (20), a data selector (25) is provided, which selects a fraction from the subdivided data buffered in the volatile memory (21), which is separated and deleted.

6. The peer-to-peer transmission system according to claim 5, **characterized in that** the selection of the to-be-excluded fraction of the subdivided data is performed by means of a counter or a random generator.

## Revendications

1. Système de transmission pair-à-pair de flux de données constitué d'un ensemble d'ordinateurs (10, 20, 30) ayant les mêmes droits et d'un mécanisme de transmission pair-à-pair (40), un flux de données étant amené à un pair émetteur (10) depuis un autre pair de l'ensemble, ledit système comprenant un partitionneur de données (12) dans chaque pair émetteur (10) qui divise le flux de données entrant de manière logique ou temporel en différentes parties qui sont stockées temporairement dans une mémoire volatile (13) et qui sont transmises au pair récepteur (20, 30) sur des chemins différents par le mécanisme de transmission pair-à-pair (40), dans un pair récepteur (20) les parties reçues du flux de données divisé étant stockées temporairement dans une mémoire volatile (21) et étant rassemblées en un flux de données complet, dans le pair de réception (20) une fraction des parties du flux de données divisé, qui sont stockées temporairement dans la mémoire volatile (21), étant copiée dans une mémoire persistante (22), et les parties du flux de données divisé, qui sont copiées dans la mémoire persistante (22), étant éventuellement recopiées à un instant ultérieur dans la mémoire volatile (21), **caractérisé en ce que** l'autre fraction des parties du flux de données divisé, qui sont stockées temporairement dans la mémoire volatile (21), est exclue de la mémoire persistante, cette exclusion étant effectuée par sélection des parties du flux de données divisé, **en ce que** la sélection de la fraction à exclure des données divisées est déterminée par une commande dans le pair émetteur (10) ou dans le pair récepteur (20) de façon à ne pas supprimer les mêmes parties de données dans chaque pair récepteur (20), et **en ce que**, dans le cas où le pair récepteur (20) a besoin de la fraction coupée et supprimée des données divisées à un instant ultérieur pour jouer au moins partiellement le rôle de pair émetteur, cette fractionnée supprimée est à nouveau transmise par le mécanisme de transmission pair-à-pair (40).

2. Système de transmission pair-à-pair selon la revendication 1, **caractérisé en ce que** la fraction exclue est petite par rapport au reste des données.

3. Système de transmission pair-à-pair selon la revendication 1 ou 2, **caractérisé en ce qu'**il est prévu dans le pair émetteur (10) un sélecteur de données (14) qui sélectionne une fraction parmi les données divisées, cette fraction sélectionnée des données divisées étant exclues du stockage temporaire dans la mémoire volatile (13) puis de la transmission par le mécanisme (40) en raison du fait que la fraction sélectionnée est séparées des données restantes des données divisées et est redirigée dans un mécanisme de transmission secondaire (50) par le sélecteur de données (14).

4. Système de transmission pair-à-pair selon la revendication 3, **caractérisé en ce que** la commande, qui détermine la sélection de la fraction à exclure des données divisées, est intégrée dans le sélecteur de données (14).

5. Système de transmission pair-à-pair selon la revendication 1 ou 2, **caractérisé en ce qu'**il est prévu dans le pair récepteur (20) un sélecteur de données (25) qui sélectionne parmi les données divisées, stockées temporairement dans la mémoire volatile (21), une fraction à séparer et à supprimer.

6. Système de transmission pair-à-pair selon la revendication 5, **caractérisé en ce que** la sélection de la fraction à exclure des données divisées est effectuée par un compteur ou un générateur de nombres aléatoires.
